# FASCICULE DE BREVET EUROPEEN

(11) **EP 3 724 896 B1**
(45) Date de publication et mention de la délivrance du brevet: **06.10.2021**
(21) Numéro de dépôt: 18815248.2
(22) Date de dépôt: 14.12.2018
(51) Int. Cl.: G21C 17/022, B01J 49/00, B01J 39/00, G21C 19/30, B01J 39/05, B01J 41/07, B01J 47/022, B01J 49/07, B01J 49/53, B01J 49/57, B01J 49/06

(54) **PROCEDE D'IDENTIFICATION DE L'UNITE A L'ORIGINE D'UNE FUITE D'EAU BRUTE DANS UN CONDENSEUR D'UNE CENTRALE THERMIQUE**
VERFAHREN ZUR ERKENNUNG EINER EINHEIT ALS URSACHE EINER ROHWASSERLECKAGE IN EINEM KONDENSATOR EINER THERMISCHEN KRAFTWERKSANLAGE
METHOD FOR IDENTIFYING THE UNIT CAUSING A RAW WATER LEAK IN A CONDENSER OF A THERMAL POWER PLANT

(30) Priorité: 15.12.2017 FR 1762199
(43) Date de publication de la demande: 21.10.2020
(73) Titulaire: Electricité de France, 75008 Paris (FR)
(72) Inventeur: BOURGEOIS, Christophe, 26790 Rochegude (FR); RIOURY, Estelle, 26700 La Garde Adhemar (FR)
(74) Mandataire: Regimbeau
(86) Numéro de dépôt international: PCT/EP2018/085039
(87) Numéro de publication internationale: WO 2019/115799

(56) Documents cités:
- DE-A1- 2 951 865
- JP-A- H1 147 560
- JP-A- 2005 257 626
- JP-A- 2008 190 933

## Description

La présente invention concerne un procédé d'identification de l'unité à l'origine d'une fuite d'eau brute dans un condenseur constitué de plusieurs unités.

Elle trouve une application dans des installations industrielles disposant d'un circuit de production de vapeur et d'un circuit de refroidissement mettant en œuvre un condenseur, notamment des centrales thermiques telles que des centrales nucléaires ou des centrales électriques à énergie fossile.

De manière générale, l'eau qui alimente le circuit de refroidissement d'une telle installation provient directement d'une rivière ou de la mer. Il s'agit d'une eau dite brute, par opposition à l'eau purifiée employée dans les autres circuits.

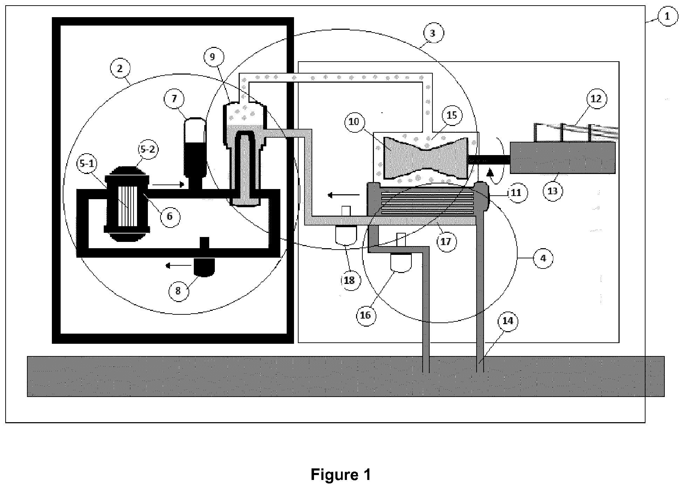

Une centrale nucléaire (1), par exemple, est composée de trois circuits distincts (Fig.1) :
- Le circuit primaire (2) constitue la source productrice de chaleur, grâce à un réacteur nucléaire (5-1) à eau sous pression enfermé dans une cuve (5-2). L'eau (6) qui traverse la cuve du réacteur est portée à haute température, au voisinage de 310°C. Un pressuriseur (7) permet d'établir une pression d'environ 155 bars, afin que l'eau reste à l'état liquide. Après avoir traversé le générateur de vapeur (9) pour y céder ses calories, l'eau est remise en circulation par l'intermédiaire d'une pompe (8), pour être à nouveau chauffée dans la cuve (5-2). Ce circuit primaire forme ainsi une boucle fermée. Selon la puissance et le palier de la centrale nucléaire, son circuit primaire peut être constitué de plusieurs boucles. Il ne comporte toutefois qu'un seul réacteur (5-1) et un seul pressuriseur (7).
- Le circuit secondaire (3) récupère la vapeur (15) produite par les générateurs de vapeur (9) des boucles du circuit primaire (2) pour actionner un ensemble de turbines (10), afin de produire de l'électricité (12) via un alternateur (13).
- Le circuit tertiaire (4), également appelé circuit de la source froide (14), assure le refroidissement de la vapeur d'eau (15) au niveau des condenseurs (11), de façon à obtenir une eau à l'état liquide, le condensat (17), qui regagne le générateur de vapeur (9) par l'action de la pompe (18). Ce circuit de refroidissement est alimenté en eau brute par la pompe (16).

En revanche, afin de garantir la longévité d'une telle installation, il importe de préserver la qualité de l'eau qui circule dans les circuits primaire (2) et secondaire (3), et donc d'éviter toute entrée d'eau brute et des polluants qu'elle contient dans ces circuits. Sont notamment considérés comme polluants les ions Na⁺, Ca²⁺ et Cl⁻, en cela qu'ils sont susceptibles d'engendrer des phénomènes de corrosion.

Une entrée d'eau brute dans un générateur de vapeur (9) du circuit secondaire peut s'avérer extrêmement pénalisante pour l'exploitant de l'installation.

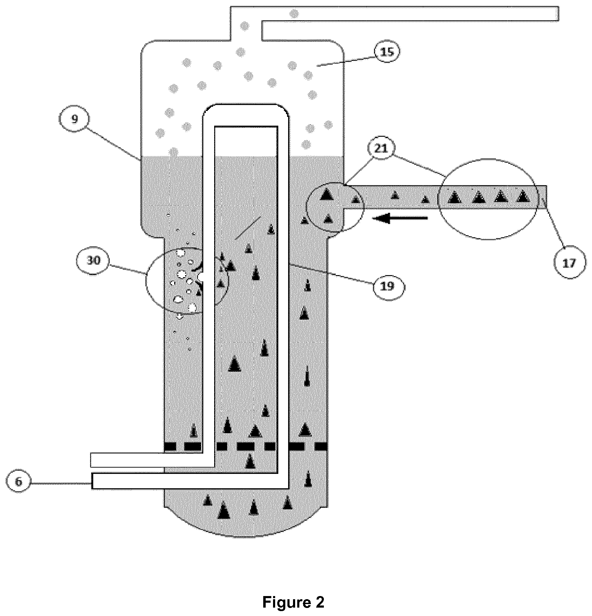

En effet, comme détaillé dans la figure 2, elle se traduit par l'intrusion d'impuretés (21), telles que Na⁺, Ca²⁺ et/ou Cl⁻, qui, du fait de leur faible volatilité, ont tendance à se concentrer dans la phase liquide. Ce phénomène de concentration peut générer des corrosions localisées qui endommagent les tubes (19) du générateur de vapeur, au sein desquels circule l'eau (6) du circuit primaire, et peuvent à terme engendrer des percements (30). Du fait du gradient de pression existant entre les circuits primaire (155 bars) et secondaire (70-80 bars), de tels percements entraînent une fuite d'eau potentiellement radioactive dans l'eau du circuit secondaire, situé dans une zone de l'installation qui n'est pas supposée être exposée aux risques radioactifs. Cet incident est considéré comme significatif selon l'échelle établie par l'Autorité de Sûreté Nucléaire et, en tant que tel, conduit à un arrêt immédiat et prolongé du réacteur nucléaire, avec obligation de réparation et décontamination du circuit secondaire. Il s'en suit notamment une perte de production notable pour l'exploitant. De surcroît, la pollution par les eaux brutes peut conduire à des corrosions généralisées sur d'autres parties du circuit secondaire, et ainsi limiter la durée de vie des composants touchés.

Il est par conséquent impératif de surveiller et détecter toute infiltration d'eau brute afin de prévenir les risques précédemment énumérés.

Le générateur de vapeur est ainsi pourvu d'un circuit de purification dit APG (Alimentation, Purge, Générateur de vapeur), dont la fonction est double. Le premier rôle de ce circuit de purge, composé notamment de filtres et de déminéraliseurs cationiques et anioniques, est de dépolluer les condensats avant de réinjecter l'eau dans le circuit secondaire. L'autre fonction du circuit APG est de réaliser une mesure directe des polluants présents dans le générateur de vapeur à l'aide de conductimètres associés à des résines cationiques et de sodiumètres. Il permet ainsi de détecter une entrée d'eau brute issue du circuit tertiaire, en provenance du condenseur.

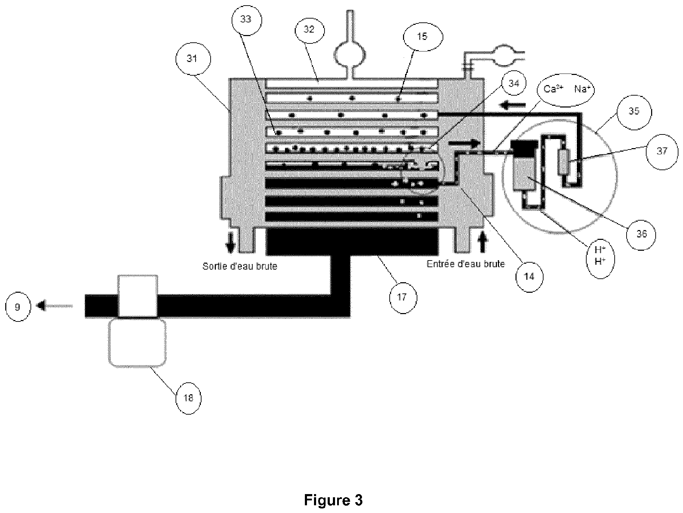

Un condenseur de centrale thermique à eau pressurisée est compartimenté en plusieurs unités identiques. A l'heure actuelle, les condenseurs employés dans le parc nucléaire français sont typiquement composés de 3 à 8 unités. Chaque unité correspond à un condenseur élémentaire (31) (Fig.3) fonctionnant comme un condenseur unique et autonome au sein duquel a lieu l'échange de chaleur entre d'une part la vapeur d'eau (15) à condenser produite par le générateur de vapeur, et d'autre part l'eau liquide en provenance de la source d'eau froide, eau brute (14) à la pression atmosphérique. La partie secondaire du condenseur (32), constituée des tubes (33) dans lesquels circule la vapeur, est maintenue sous vide de façon à favoriser la condensation de la vapeur et ainsi augmenter le rendement thermique de l'installation. Ces tubes étant en contact direct avec l'eau brute de refroidissement sont susceptibles de subir un phénomène de corrosion pouvant engendrer un percement (34) et donc, du fait du gradient de pression, une entrée d'eau brute dans le circuit secondaire, qui se mélange au condensat (17) qui alimente le générateur de vapeur (9).

De manière classique, chaque unité de condenseur est équipée d'un système de surveillance de la qualité de l'eau (35) permettant de détecter une infiltration d'eau brute dans le condensat. Pour ce faire, un échantillon dudit condensat est prélevé par piquage pour être analysé dans le dispositif constitué d'une résine échangeuse d'ions (36) et d'un conductimètre (37). Si, par exemple, une entrée d'eau brute de rivière dans les tubes du condenseur s'est produite, l'échantillon de condensat contient notamment des ions Na⁺ et Ca²⁺, qui vont être captés par la résine cationique et ainsi entraîner le départ d'ions H⁺ qui vont augmenter la conductivité de l'eau. La mesure de la conductivité cationique de l'eau après son passage sur la résine échangeuse d'ions par le conductimètre est proportionnelle à la concentration des ions Na⁺ et Ca²⁺ dans le condensat. Cette méthode de détection de polluants est notamment décrite dans le document EP0013528.

L'identification de l'unité de condenseur à l'origine d'une fuite d'eau brute selon le principe de la mesure de la conductivité cationique était efficace lorsque les condenseurs étaient en cuivre. En effet, ces condenseurs subissaient des phénomènes de corrosion importants, à l'origine d'entrées de volumes d'eau brute suffisants pour être détectés par une telle méthode.

Or, depuis quelques années, de plus en plus de centrales sont équipées de condenseurs en inox, moins sujets à la corrosion. Les fuites d'eau brute, lorsqu'elles ont lieu, sont en conséquence beaucoup moins importantes que dans le cas des condenseurs en cuivre, si bien que le système de surveillance classique constitué d'une résine échangeuse d'ions et d'un conductimètre n'est plus assez sensible pour les détecter.

Bien que faibles, ces infiltrations d'eau brute doivent néanmoins être identifiées afin de prévenir les risques que représentent les phénomènes de corrosion. Un protocole palliatif a donc été mis en place, décrit ci-après.

La détection d'une entrée d'eau brute à partir des paramètres conductivité et sodium mesurés au niveau du générateur de vapeur via son circuit APG reste possible. En effet, du fait du phénomène de concentration, les impuretés y sont présentes en quantité suffisamment importante pour être repérée par ce système de surveillance. Lorsqu'une anomalie est constatée dans les mesures effectuées au niveau du circuit APG, il convient dans un premier temps de valider le diagnostic d'une infiltration d'eau brute en provenance du condenseur par élimination des autres sources de pollution envisageables.

Ensuite, l'exploitant isole successivement les différentes unités de condenseur de l'installation. Lorsque que l'unité à l'origine de la fuite est isolée, les paramètres mesurés par le circuit APG retrouvent leur valeur normale. Ce protocole permet ainsi d'identifier l'unité défectueuse.

L'inconvénient majeur de cette méthode réside dans le fait que l'isolement d'une unité du condenseur réduit la surface d'échange globale de ce dernier et nécessite donc d'ajuster le débit du circuit secondaire en abaissant la puissance du réacteur, ce qui engendre des pertes de production.

Par ailleurs, dans la mesure où le circuit APG est relativement éloigné du condenseur, dans lequel se produit l'entrée d'eau brute, d'autre sources de pollution émanant des éléments de l'installation situés entre le condenseur et le générateur de vapeur peuvent impacter les paramètres du circuit APG, sur lesquels sont fondées le diagnostic. Ainsi, ces pollutions parasites peuvent induire un diagnostic erroné.

Il importe donc de mettre au point une procédure alternative permettant de déterminer l'origine d'une infiltration d'eau brute, sans qu'il soit nécessaire d'isoler une à une les unités de condenseur afin d'éviter les baisses de charge inhérentes à un tel protocole. Pour ce faire, il convient de proposer une méthode de mesure qui peut être mise en œuvre directement au niveau des condenseurs, rendant en outre possible la détection précoce d'une fuite et permettant ainsi d'éviter le développement des phénomènes de corrosion dans le circuit secondaire.

La difficulté réside dans le fait que les percements pouvant se produire sur un condenseur en inox sont de taille réduite, et que par conséquent les fuites d'eau brute correspondantes sont très faibles.

Dans les centrales nucléaires actuellement en fonctionnement en France, une telle fuite est typiquement de l'ordre de 1 à 2 L/h. Le débit de l'eau dans le condenseur étant d'environ 700 à 800 m³/h, la fuite subit donc une dilution d'un facteur 700 000 à 800 000.

La concentration moyenne de l'ion prépondérant dans l'eau de refroidissement utilisée sur le site de la mise au point de l'invention, Ca²⁺, est de l'ordre de 50 ppm (50 mg/L). La quantité à mesurer est donc théoriquement d'environ 0,07 µg/L. Les moyens de détection actuels les plus sensibles, telle que la spectrométrie d'absorption atomique, permettent de mesurer des valeurs de l'ordre de 1 ppb (1 µg/l), ce qui représente une valeur plus de 14 fois supérieure à la concentration théorique qu'une fuite au niveau d'un condenseur en inox peut générer.

Les inventeurs de la présente invention sont néanmoins parvenus à développer un procédé permettant une identification fiable et directe de l'unité de condenseur en inox à l'origine d'une faible entrée d'eau brute dans un générateur de vapeur d'une centrale thermique, sans qu'il soit nécessaire d'isoler successivement les unités de condenseur de l'installation.

Le procédé objet de la présente invention repose sur la concentration des ions présents dans l'eau brute par piégeage dans une colonne contenant une résine échangeuse d'ions, chaque boîte de condenseur étant munie de sa propre colonne.

La nature de la résine échangeuse d'ions dépend de l'origine de l'eau brute qui alimente le circuit de refroidissement du condenseur :
- s'il s'agit d'une eau de rivière, les ions susceptibles d'engendrer un phénomène de corrosion sont des ions Na⁺ et Ca²⁺, qui peuvent être piégés par une résine cationique adéquate ;
- s'il s'agit d'une eau de mer, les ions susceptibles d'engendrer un phénomène de corrosion sont des ions Cl⁻, qui peuvent être piégés par une résine anionique adéquate.

Lorsqu'une quantité d'eau déterminée a circulé dans la colonne, la résine est collectée, et les ions fixés sont libérés par élution avec une solution acide (respectivement basique), permettant de surcroît la régénération de la résine cationique (respectivement anionique).

Il est alors possible de déterminer la concentration des ions susceptibles d'engendrer un phénomène de corrosion dans le condensat ayant circulé dans la colonne d'une unité de condenseur donnée par une méthode spectroscopique.

La comparaison des concentrations déterminées pour chacune des unités permet d'identifier laquelle est défaillante.

Ce protocole peut être appliqué dès qu'un seuil prédéterminé ou une évolution anormale des paramètres mesurés au niveau du circuit APG du générateur de vapeur sont observés. Il peut être mis en œuvre tranche en marche ou tranche à l'arrêt.

Afin d'obtenir après élution de la résine une quantité d'ions détectables par les méthodes spectroscopiques existantes, les inventeurs ont effectué un travail de redimensionnement du volume de résine utilisé par rapport à ceux qui étaient employés dans le cadre de la méthode traditionnelle de mesure de la conductivité cationique. Le volume de condensat élué dans la résine impacte également la quantité d'ions obtenus après élution.

Par ailleurs, de manière surprenante, il s'est avéré que l'utilisation directe de résines commerciales neuves ne permet pas d'aboutir à l'identification de l'unité de condenseur défaillante. Ainsi, le procédé objet de la présente invention nécessite une étape de traitement préalable de la résine échangeuse d'ions avant la mise en œuvre du protocole.

La présente invention concerne donc un procédé d'identification de l'unité à l'origine d'une fuite d'eau brute de refroidissement dans un condenseur d'une centrale thermique constitué de n unités, n étant un nombre entier compris entre 2 et 15, de préférence entre 3 et 8,
caractérisé en ce que chacune des n unités est équipée d'une cartouche destinée à contenir une résine échangeuse d'ions dans un volume compris entre 50 et 150 mL, avantageusement entre 80 et 120 mL,
et en ce qu'il comprend les étapes suivantes :
   a) pour chacune des n unités, la purification de la résine échangeuse d'ions destinée à être mise en place dans la cartouche ;
   b) pour chacune des n unités, la mise en place de la résine échangeuse d'ions purifiée obtenue à l'issue de l'étape a) dans la cartouche ;
   c) pour chacune des n unités, le passage d'un volume de condensat compris entre 500 et 1 500 L, avantageusement entre 800 et 1 200 L dans la cartouche contenant la résine échangeuse d'ions purifiée mise en place lors de l'étape b);
   d) pour chacune des n unités, la collecte de la résine échangeuse d'ions obtenue à l'issue de l'étape c) ;
   e) pour chacune des n unités, la régénération de la résine échangeuse d'ions collectée lors de l'étape d) par élution à l'aide d'une solution aqueuse de régénération;
   f) pour chacune des n unités, la collecte de l'éluât obtenu à l'issue de l'étape e) suivie de la détermination de la nature des espèces ioniques présentes dans ledit éluât et de la quantité de chaque espèce ionique présente dans ledit éluât ; et
   g) pour chacune des espèces ioniques identifiées lors de l'étape f), la comparaison des quantités de ladite espèce ionique déterminées dans chacun des n éluats.

Par « eau brute de refroidissement » on entend, au sens de la présente invention, la source froide qui alimente le condenseur, qui consiste en une eau de rivière ou de mer non purifiée.

Une « unité de condenseur » désigne, au sens de la présente invention, un condenseur élémentaire, étant entendu que le condenseur d'une centrale thermique est compartimenté en plusieurs condenseurs élémentaires identiques.

Par « condensat » on entend, au sens de la présente invention, l'eau à l'état liquide qui résulte de la condensation de la vapeur d'eau en provenance du générateur de vapeur. Ledit condensat peut contenir en outre de l'eau brute de refroidissement du fait d'une infiltration consécutive à un percement d'un tube du condenseur, ledit percement pouvant notamment résulter d'un phénomène de corrosion. Sont alors présents dans le condensat des polluants susceptibles d'engendrer un phénomène de corrosion.

Une « résine échangeuse d'ions » est un matériau solide se présentant généralement sous forme de billes composées d'une « matrice polymère » sur laquelle sont greffés des groupements fonctionnels chargés positivement ou négativement qui vont permettre un « échange d'ions ».

La « matrice polymère » selon l'invention peut être de type gel ou macroporeuse, avantageusement de type gel.

Il peut s'agit notamment d'une matrice de polystyrène, de copolymère polystyrène-divinylbenzène ou de polyacrylate réticulés.

Le diamètre moyen des billes de résine selon l'invention est compris entre 0,2 mm et 1,2 mm, notamment entre 0,3 mm et 0,8 mm, en particulier entre 0,4 mm et 0,7 mm.

Les billes de résine selon l'invention sont en outre caractérisées par un coefficient d'uniformité inférieur ou égal à 1,8, notamment inférieur ou égal à 1,5, de préférence inférieur ou égal à 1,2.

L'« échange d'ions » est un processus au cours duquel les ions d'une certaine charge contenus dans une solution sont éliminés de cette solution par adsorption sur un matériau solide, l'échangeur d'ions, pour être remplacés par une quantité équivalente d'autres ions de même charge émis par le solide.

On distingue les résines cationiques des résines anioniques.

Une « résine cationique » comporte des groupements fonctionnels chargés négativement. Lorsque l'on fait circuler une solution aqueuse contenant des ions sur une telle résine, les cations initialement présents en tant que contre-ions des groupements fonctionnels afin d'assurer l'électroneutralité de la résine vont être progressivement remplacés par les cations présents dans la solution éluante, jusqu'à saturation de la résine.

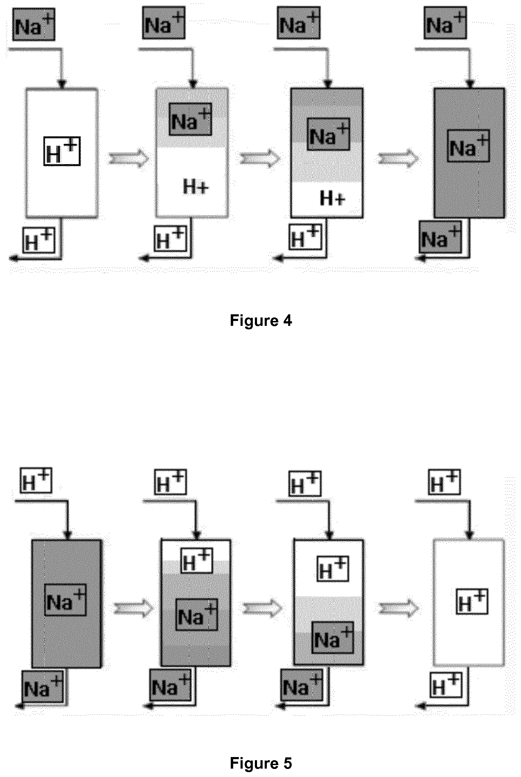

La saturation progressive d'une résine cationique comportant initialement des ions H⁺ par échange avec des ions Na⁺ est représentée figure 4.

Une « résine anionique » comporte des groupements fonctionnels chargés positivement, étant entendu qu'il peut s'agit d'une charge partielle. Lorsque l'on fait circuler une solution aqueuse contenant des ions sur telle une résine, les anions initialement contenus dans la résine vont être progressivement remplacés par les anions présents dans la solution éluante, jusqu'à saturation de la résine.

La « capacité d'échange » d'une résine échangeuse d'ions, exprimée en équivalent par litre, correspond au pouvoir de rétention des ions jusqu'à saturation de la résine.

Sa « capacité totale d'échange » correspond à la concentration équivalente en groupements fonctionnels, et donc au nombre d'ions monovalents échangeables par unité de volume.

Une résine échangeuse d'ions selon l'invention présente une capacité totale d'échange supérieure à 1,0 éq/L, de préférence supérieure à 1,5 éq/L, avantageusement supérieure à 2,0 éq/L.

Une résine échangeuse d'ions saturée peut être régénérée par élution à l'aide d'une « solution de régénération » contenant des ions de même charge que ceux adsorbés sur la résine.

La « régénération » d'une résine cationique peut être effectuée à l'aide d'une solution aqueuse de régénération consistant en une solution d'un acide minéral, de préférence un acide fort (pKₐ ≤ 0), tel que l'acide chlorhydrique, l'acide nitrique ou l'acide sulfurique. La régénération progressive d'une résine cationique saturée en ions Na⁺ est représentée figure 5.

La régénération d'une résine anionique peut être effectuée à l'aide d'une solution aqueuse de régénération consistant en une solution aqueuse d'une base, de préférence une base forte (pKₐ ≥ 14), tel que la soude.

Une résine échangeuse d'ions peut être sélective de certains ions, c'est-à-dire fixer de manière préférentielle certains ions.

Par « purification de la résine échangeuse d'ions », on entend, au sens de la présente invention, une opération d'élution visant à éliminer la présence d'impuretés dans la résine.

### Cas d'une eau brute de rivière

Lorsque le circuit de refroidissement est alimenté par une eau de rivière, les polluants susceptibles d'engendrer un phénomène de corrosion sont notamment des ions Na⁺ et Ca²⁺.

La « résine échangeuse d'ions » utilisée dans le procédé selon l'invention consiste alors en une résine cationique.

La résine se présente alors sous la forme de billes de polymère, notamment de polystyrène ou de copolymère polystyrène-divinylbenzène, sur lesquelles sont greffées des groupements fonctionnels échangeurs de cations chargés négativement.

De préférence, la résine présente une forte affinité pour les ions Na⁺ et Ca²⁺. Avantageusement, la résine est sélective des ions Na⁺ et Ca²⁺.

Il peut s'agir d'une résine cationique fortement acide, ayant pour groupements fonctionnels échangeur des groupes SO₃⁻ par exemple, ou d'une résine cationique faiblement acide, ayant pour groupements fonctionnels échangeur des groupes CO₂⁻ par exemple. Avantageusement, il s'agit d'une résine fortement acide.

Dans un mode de réalisation particulier, la résine échangeuse d'ions est une résine cationique fortement acide, qui consiste en des billes de polystyrène ou de copolymère polystyrène-divinylbenzène sur lesquelles sont greffées des groupe SO₃⁻ et ayant un coefficient d'uniformité inférieur ou égal à 1,8, notamment inférieur ou égal à 1,5, de préférence inférieur ou égal à 1,2, la capacité totale d'échange de la résine étant supérieure à 1,0 éq/L, de préférence supérieure à 1,5 éq/L, avantageusement supérieure à 2,0 éq/L.

Avantageusement, les contre-ions des groupes SO₃⁻ initialement présents dans la résine avant la mise en œuvre du procédé objet de la présente invention sont des ions H⁺. En particulier, avant la mise en avant la mise en œuvre du procédé objet de la présente invention, au moins 99 % des groupes SO₃⁻ ont pour contre-ion un ion H⁺.

Avantageusement, avant la mise en œuvre du procédé objet de la présente invention, la concentration en ions Na⁺ dans la résine est inférieure à 100 ppm, de préférence inférieure à 70 ppm, préférentiellement inférieure à 50 ppm.

Avantageusement, avant la mise en œuvre du procédé objet de la présente invention, la concentration en ions Ca²⁺ dans la résine est inférieure à 100 ppm, de préférence inférieure à 70 ppm, préférentiellement inférieure à 50 ppm.

Avantageusement, avant la mise en œuvre du procédé objet de la présente invention, la concentration en chacun des cations présents dans la résine est inférieure à 100 ppm, de préférence inférieure à 70 ppm, préférentiellement inférieure à 50 ppm.

La résine cationique pourra en particulier être une résine spécialement destinée à un usage nucléaire.

Ainsi, la résine cationique pourra avantageusement être choisie parmi les résines Amberlite IRN97 H, IRN77 et IRN99 commercialisées par Dow et les résines Purolite NRW1000, NRW1100, NRW1160, NRW1180 et NRW160 commercialisées par Purolite.

En particulier, la résine cationique peut être la résine Amberlite IRN97 H.

Comme mentionné précédemment, il est nécessaire de procéder lors de l'étape a) du procédé selon l'invention à la purification de la résine cationique destinée à être mise en place dans la cartouche qui équipe chaque unité de condenseur.

La purification est réalisée par élution à l'aide d'une solution acide, de préférence un acide fort, tel que l'acide chlorhydrique, l'acide nitrique ou l'acide sulfurique.

Le pourcentage massique de l'acide en solution est compris entre 1 et 50 %, notamment entre 5 et 30 %, en particulier entre 10 et 20 % en poids par rapport au poids total de la solution.

L'opération d'élution consiste à verser sur la résine un volume de solution acide au moins 2 fois supérieur, notamment au moins 4 fois supérieur, avantageusement au moins 5 fois supérieur au volume de résine.

Avantageusement, la solution acide de purification présente une concentration en ions Na⁺ inférieure à 1 ppb, notamment inférieure à 0,5 ppb, en particulier inférieure à 0,2 ppb.

Avantageusement, la solution acide de purification présente une concentration en ions Ca²⁺ inférieure à 1 ppb, notamment inférieure à 0,5 ppb, en particulier inférieure à 0,2 ppb.

Avantageusement, chaque cation présent dans la solution acide de purification a une concentration inférieure à 1 ppb, notamment inférieure à 0,5 ppb, en particulier inférieure à 0,2 ppb.

Dans un mode de réalisation préféré, à l'issu de l'étape a) de purification, les concentrations en ions Na⁺ et Ca²⁺ dans la résine sont inférieures à 1 ppb, notamment inférieures à 0,5 ppb, en particulier inférieures à 0,2 ppb.

Au cours de l'étape c) du procédé selon l'invention, les ions H⁺ présents dans la résine cationique purifiée obtenue à l'issue de l'étape a) et mise en place lors de l'étape b) sont échangés avec les ions Na⁺ et/ou Ca²⁺ du condensat jusqu'à saturation de la résine.

L'étape e) de régénération de la résine cationique peut être réalisée par élution à l'aide d'une solution aqueuse de régénération consistant en une solution d'un acide minéral, de préférence un acide fort tel que l'acide chlorhydrique, l'acide nitrique ou l'acide sulfurique.

Le pourcentage massique de l'acide dans la solution de régénération est compris entre 1 et 50 %, notamment entre 5 et 30 %, en particulier entre 10 et 20 % en poids par rapport au poids total de la solution.

En particulier, l'élution consiste à verser sur la résine un volume de solution acide au moins 2 fois supérieur, notamment au moins 4 fois supérieur, avantageusement au moins 5 fois supérieur au volume de résine.

Avantageusement, la solution de régénération présente une concentration en ions Na⁺ inférieure à 1 ppb, notamment inférieure à 0,5 ppb, en particulier inférieure à 0,2 ppb.

Avantageusement, la solution de régénération présente une concentration en ions Ca²⁺ inférieure à 1 ppb, notamment inférieure à 0,5 ppb, en particulier inférieure à 0,2 ppb.

Avantageusement, chaque cation présent dans la solution de régénération a une concentration inférieure à 1 ppb, notamment inférieure à 0,5 ppb, en particulier inférieure à 0,2 ppb.

Au cours de l'étape f) du procédé selon l'invention sont déterminées les quantités d'ions Na⁺ et/ou Ca²⁺ présents dans l'éluât obtenu à l'issue de l'étape e).

Cette mesure peut être effectuée par les méthodes spectroscopiques bien connues de l'homme du métier, telle que la que la spectroscopie d'absorption atomique.

### Cas d'une eau brute de mer

Lorsque le circuit de refroidissement est alimenté par une eau de rivière, les polluants susceptibles d'engendrer un phénomène de corrosion sont notamment des ions Cl⁻.

La « résine échangeuse d'ions » utilisée dans le procédé selon l'invention consiste alors en une résine anionique.

La résine se présente alors sous la forme de billes de polymère, notamment de polystyrène ou de copolymère polystyrène-divinylbenzène, sur lesquelles sont greffées des groupements fonctionnels échangeurs d'anions.

De préférence, la résine présente une forte affinité pour les ions Cl⁻. Avantageusement, la résine est sélective des ions Cl⁻.

Il peut s'agir d'une résine anionique fortement basique, ayant pour groupements fonctionnels échangeur des groupes ammoniums N(RR'R")⁺, où R, R' et R" sont des groupements (C₁-C₆)alkyle identiques ou différents.

Il peut s'agir d'une résine anionique faiblement basique, ayant pour groupements fonctionnels échangeur des groupes amines NRR', où R et R' sont des groupements (C₁-C₆)alkyle identiques ou différents.

Par groupement « (C₁-C₆)alkyle », on entend, au sens de la présente invention, une chaîne hydrocarbonée saturée, linéaire ou ramifiée, comportant 1 à 6, de préférence 1 à 4, atomes de carbone. A titre d'exemple, on peut citer les groupes méthyle et éthyle.

Dans un mode de réalisation particulier, la résine échangeuse d'ions est une résine anionique fortement basique, qui consiste en des billes de polystyrène ou de copolymère polystyrène-divinylbenzène sur lesquelles sont greffées des groupe ammoniums, tels que des groupes N(CH₃)₃⁺ et ayant un coefficient d'uniformité inférieur ou égal à 1,8, notamment inférieur ou égal à 1,5, de préférence inférieur ou égal à 1,2, la capacité totale d'échange de la résine étant supérieure à 1,0 éq/L, de préférence supérieure à 1,5 éq/L, avantageusement supérieure à 2,0 éq/L.

Avantageusement, les contre-ions des groupes ammoniums initialement présents dans la résine avant la mise en œuvre du procédé objet de la présente invention sont des ions HO⁻. En particulier, avant la mise en avant la mise en œuvre du procédé objet de la présente invention, au moins 95 % des groupes ammoniums ont pour contre-ion un ion HO⁻.

Avantageusement, avant la mise en œuvre du procédé objet de la présente invention, la concentration en ions Cl⁻ dans la résine est inférieure à 100 ppm, de préférence inférieure à 70 ppm, préférentiellement inférieure à 50 ppm.

Avantageusement, avant la mise en œuvre du procédé objet de la présente invention, la concentration en chacun des anions présents dans la résine est inférieure à 100 ppm, de préférence inférieure à 70 ppm, préférentiellement inférieure à 50 ppm.

La résine anionique pourra en particulier être une résine spécialement destinée à un usage nucléaire.

Ainsi, la résine anionique pourra avantageusement être choisie parmi la résine Amberlite IRN78 commercialisée par Dow et les résines Purolite NRW4000, NRW6000, NRW7000, NRW8000, NRW5010, NRW5050 et NRW5070 commercialisées par Purolite.

Comme mentionné précédemment, il est nécessaire de procéder lors de l'étape a) du procédé selon l'invention à la purification de la résine anionique destinée à être mise en place dans la cartouche qui équipe chaque unité de condenseur.

La purification est réalisée par élution à l'aide d'une solution basique, de préférence une solution de base forte, telle que la soude.

Le pourcentage massique de la base en solution est compris entre 1 et 50 %, notamment entre 5 et 30 %, en particulier entre 10 et 20 % en poids par rapport au poids total de la solution.

L'opération d'élution consiste à verser sur la résine un volume de solution basique au moins 2 fois supérieur, notamment au moins 4 fois supérieur, avantageusement au moins 5 fois supérieur au volume de résine.

Avantageusement, la solution basique de purification présente une concentration en ions Cl⁻ inférieure à 1 ppb, notamment inférieure à 0,5 ppb, en particulier inférieure à 0,2 ppb.

Avantageusement, chaque anion présent dans la solution basique de purification a une concentration inférieure à 1 ppb, notamment inférieure à 0,5 ppb, en particulier inférieure à 0,2 ppb.

Au cours de l'étape c) du procédé selon l'invention, les ions HO⁻ présents dans la résine anionique purifiée obtenue à l'issue de l'étape a) et mise en place lors de l'étape b) sont échangés avec les ions Cl⁻ du condensat jusqu'à saturation de la résine.

L'étape e) de régénération de la résine anionique peut être réalisée par élution à l'aide d'une solution aqueuse de régénération consistant en une solution de base, de préférence une base forte telle que la soude.

Le pourcentage massique de la base dans la solution de régénération est compris entre 1 et 50 %, notamment entre 5 et 30 %, en particulier entre 10 et 20 % en poids par rapport au poids total de la solution.

En particulier, l'élution consiste à verser sur la résine un volume de solution basique au moins 2 fois supérieur, notamment au moins 4 fois supérieur, avantageusement au moins 5 fois supérieur au volume de résine.

Avantageusement, la solution de régénération présente une concentration en ions Cl⁻ inférieure à 1 ppb, notamment inférieure à 0,5 ppb, en particulier inférieure à 0,2 ppb.

Avantageusement, la solution de régénération présente une concentration en ions Cl⁻ inférieure à 1 ppb, notamment inférieure à 0,5 ppb, en particulier inférieure à 0,2 ppb.

Avantageusement, chaque anion présent dans la solution de régénération a une concentration inférieure à 1 ppb, notamment inférieure à 0,5 ppb, en particulier inférieure à 0,2 ppb.

Au cours de l'étape f) du procédé selon l'invention sont déterminées les quantités d'ions Cl⁻ présents dans l'éluât obtenu à l'issue de l'étape e).

Cette mesure peut être effectuée par les méthodes spectroscopiques bien connues de l'homme du métier.

La présente invention est illustrée par les figures et exemples non limitatifs détaillés ci-après.

### FIGURES :

Figure 1 : représentation simplifiée d'une centrale nucléaire à eau pressurisée.
Figure 2 : représentation schématique d'un générateur de vapeur.
Figure 3 : représentation schématique d'une unité de condenseur élémentaire, associé à son système de détection constitué d'une résine échangeuse d'ions cationique et d'un conductimètre.
Figure 4 : Représentation schématique de la saturation d'une résine échangeuse d'ions cationique par des ions Na⁺.
Figure 5 : Représentation schématique de la régénération d'une résine échangeuse d'ions cationique.
Figure 6 : Représentation schématique des étapes mises en œuvre dans l'exemple décrit ci-après.
Figures 7a et 7b : Concentrations en ions Ca²⁺ déterminées dans les différentes unités d'un condenseur dans les exemples décrits ci-après, sans procéder à une étape de purification de la résine (7b) ou en mettant en œuvre le procédé selon l'invention (7a).

### EXEMPLES :

### ▪ Mise en œuvre du procédé selon l'invention :

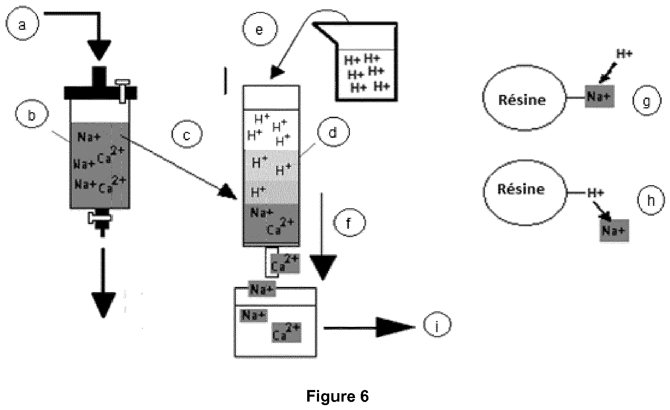

Le protocole décrit ci-après a été mis en œuvre sur un condenseur de centrale nucléaire constitué de 7 unités, dont le circuit de refroidissement est alimenté par une eau brute de rivière, contenant des ions Na⁺ et Ca²⁺. Les différentes étapes sont représentées figure 6.

La résine cationique utilisée est l'amberlite IRN97 H.

Une opération de purification de la résine est réalisée, consistant à verser 500 mL d'une solution d'acide chlorhydrique sur 100 mL de résine. La solution employée est une dilution à 15 % de l'acide chlorhydrique Suprapur® commercialisé par Merck, la dilution étant réalisée avec de l'eau déminéralisée ayant une concentration en Na⁺ et en Ca²⁺ inférieure à 1 ppb.

On positionne sur chaque unité du condenseur une cartouche contenant 100 mL de la résine cationique préalablement purifiée.

L'eau du circuit secondaire (a) passe sur la cartouche contenant 100 mL de résine cationique purifiée, les cations contenus dans l'eau sont retenus sur la résine (b). Une fois le volume de condensat suffisant passé sur la résine (environ 1 m³), la résine est récupérée et transvasée (c) dans une colonne de verre de laboratoire (d). La résine dans la colonne de verre est ensuite éluée (on fait circuler dessus de l'acide) par une solution d'acide concentrée contenant des ions H⁺ (e). Les ions H⁺ vont remplacer sur la résine les cations fixés (g et h). Les cations ainsi décrochés (f) vont être récupérés et mesurés par un appareil spécifique (i).

L'opération d'élution consiste à verser 500 mL ou plus d'acide sur 100 mL de résine. La solution acide utilisée est la même que celle employée pour l'opération de purification. L'acide s'écoule à travers la résine à raison d'une à deux gouttes par seconde. L'éluât est récupéré à la sortie de la résine par fractions de 100 mL. On dose le calcium sur chaque fraction prélevée par spectrométrie d'absorption atomique.

Ces cations proviennent du volume connu de condensat avec lequel la résine a été éluée. On peut donc déterminer la concentration en ions Ca²⁺ présents dans le condensat pour chaque unité.

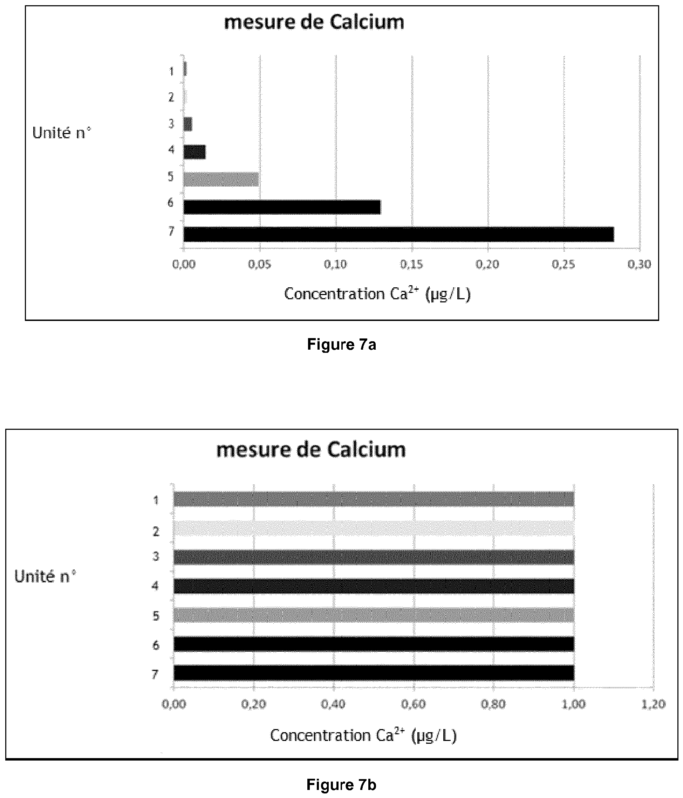

Les résultats obtenus sont représentés figure 7a.

### ▪ Exemple comparatif :

Le même protocole est reproduit, sans procéder à la purification de la résine cationique. Les résultats obtenus sont représentés figure 7b.

## Revendications

1. Procédé d'identification de l'unité à l'origine d'une fuite d'eau brute dans un condenseur d'une centrale thermique constitué de n unités, n étant un nombre entier compris entre 2 et 15, de préférence entre 3 et 8,
**caractérisé en ce que** chacune des n unités est équipée d'une cartouche destinée à contenir une résine échangeuse d'ions dans un volume compris entre 50 et 150 mL, avantageusement entre 80 et 120 mL,
et **en ce qu'**il comprend les étapes suivantes :
a) pour chacune des n unités, la purification de la résine échangeuse d'ions destinée à être mise en place dans la cartouche ;
b) pour chacune des n unités, la mise en place de la résine échangeuse d'ions purifiée obtenue à l'issue de l'étape a) dans la cartouche ;
c) pour chacune des n unités, le passage d'un volume de condensat compris entre 500 et 1 500 L, avantageusement entre 800 et 1 200 L dans la cartouche contenant la résine échangeuse d'ions purifiée mise en en place lors de l'étape b) ;
d) pour chacune des n unités, la collecte de la résine échangeuse d'ions obtenue à l'issue de l'étape c) ;
e) pour chacune des n unités, la régénération de la résine échangeuse d'ions collectée lors de l'étape d) par élution à l'aide d'une solution aqueuse de régénération ;
f) pour chacune des n unités, la collecte de l'éluât obtenu à l'issue de l'étape e) suivie de la détermination de la nature des espèces ioniques présentes dans l'éluât et de la quantité de chaque espèce ionique présente dans ledit éluât ; et
g) pour chacune des espèces ioniques identifiées lors de l'étape f), la comparaison des quantités de ladite espèce ionique déterminées dans chacun des n éluats.

2. Procédé d'identification de l'unité à l'origine d'une fuite d'eau brute dans un condenseur d'une centrale thermique selon la revendication 1, dans lequel la résine échangeuse d'ions a une capacité totale d'échange supérieure à 1,0 éq/L, de préférence supérieure à 1,5 éq/L, avantageusement supérieure à 2,0 éq/L.

3. Procédé d'identification de l'unité à l'origine d'une fuite d'eau brute dans un condenseur d'une centrale thermique selon la revendication 1 ou 2, dans lequel l'eau brute contient des ions Na⁺ et/ou Ca²⁺, et la résine échangeuse d'ions est une résine cationique.

4. Procédé d'identification de l'unité à l'origine d'une fuite d'eau brute dans un condenseur d'une centrale thermique selon la revendication 3, dans lequel l'étape a) est réalisée par élution de la résine cationique par un volume de solution d'acide au moins 2 fois supérieur, notamment au moins 4 fois supérieur, avantageusement au moins 5 fois supérieur au volume de résine.

5. Procédé d'identification de l'unité à l'origine d'une fuite d'eau brute dans un condenseur d'une centrale thermique selon la revendication 4, dans lequel la solution d'acide est une solution d'acide fort qui présente une concentration en ions Na⁺ et Ca²⁺ inférieure à 1 ppb, notamment inférieure à 0,5 ppb, en particulier inférieure à 0,2 ppb.

6. Procédé d'identification de l'unité à l'origine d'une fuite d'eau brute dans un condenseur d'une centrale thermique selon l'une quelconque des revendications 3 à 5, dans lequel l'étape e) est réalisée par élution de la résine cationique par un volume de solution aqueuse de régénération au moins 2 fois supérieur, notamment au moins 4 fois supérieur, avantageusement au moins 5 fois supérieur au volume de résine.

7. Procédé d'identification de l'unité à l'origine d'une fuite d'eau brute dans un condenseur d'une centrale thermique selon la revendication 6, dans lequel la solution aqueuse de régénération est une solution d'acide fort qui présente une concentration en ions Na⁺ et Ca²⁺ inférieure à 1 ppb, notamment inférieure à 0,5 ppb, en particulier inférieure à 0,2 ppb.

8. Procédé d'identification de l'unité à l'origine d'une fuite d'eau brute dans un condenseur d'une centrale thermique selon la revendication 1 ou 2, dans lequel l'eau brute contient des ions Cl⁻, et la résine échangeuse d'ions est une résine anionique.

## Patentansprüche

1. Verfahren zur Identifizierung der Einheit, die zu einem Austritt von Rohwasser in einem Kondensator eines Wärmekraftwerks mit n Einheiten führt, wobei n eine ganze Zahl zwischen 2 und 15, vorzugsweise zwischen 3 und 8, ist,
**dadurch gekennzeichnet, dass** jede der n Einheiten mit einer Patrone ausgestattet ist, die ein Ionenaustauscherharz in einem Volumen zwischen 50 und 150 ml, vorteilhafterweise zwischen 80 und 120 ml, enthält,
und dass es die folgenden Schritte umfasst:
a) für jede der n Einheiten die Reinigung des Ionenaustauscherharzes, das in die Patrone eingesetzt werden soll;
b) für jede der n Einheiten das Einsetzen des gereinigten Ionenaustauscherharzes, das am Ende des Schritts a) erhalten wird, in die Patrone;
c) für jede der n Einheiten das Durchleiten eines Kondensatvolumens zwischen 500 und 1.500 l, vorteilhafterweise zwischen 800 und 1.200 l durch die Patrone, die das gereinigte Ionenaustauscherharz enthält, das in Schritt b) eingesetzt wurde;
d) für jede der n Einheiten die Sammlung des am Ende des Schritts c) erhaltenen Ionenaustauscherharzes;
e) für jede der n Einheiten die Regeneration des in Schritt d) gesammelten Ionenaustauscherharzes durch Elution mit einer wässrigen Regenerationslösung;
f) für jede der n Einheiten die Sammlung des am Ende des Schritts e) erhaltenen Eluats und anschließende Bestimmung der Art der in dem Eluat vorhandenen ionischen Spezies und der Menge jeder in diesem Eluat enthaltenen ionischen Spezies; und
g) für jede der in Schritt f) identifizierten ionischen Spezies das Vergleichen der in jedem der n Eluate bestimmten Mengen dieser ionischen Spezies.

2. Verfahren zur Identifizierung der Einheit, die zu einem Austritt von Rohwasser in einem Kondensator eines Wärmekraftwerks nach Anspruch 1 führt, wobei das Ionenaustauscherharz eine Gesamtaustauschkapazität von mehr als 1,0 Äqu./l, vorzugsweise mehr als 1,5 Äqu./l, vorteilhafterweise mehr als 2,0 Äqu./l aufweist.

3. Verfahren zur Identifizierung der Einheit, die zu einem Austritt von Rohwasser in einem Kondensator eines Wärmekraftwerks nach Anspruch 1 oder 2 führt, wobei das Rohwasser Na⁺- und/oder Ca²⁺-Ionen enthält, und das Ionenaustauscherharz ein Kationenharz ist.

4. Verfahren zur Identifizierung der Einheit, die zu einem Austritt von Rohwasser in einem Kondensator eines Wärmekraftwerks nach Anspruch 3 führt, wobei der Schritt a) durch Elution des Kationenharzes mit einem Volumen von Säurelösung durchgeführt wird, das mindestens 2-mal, insbesondere mindestens 4-mal, vorteilhafterweise mindestens 5-mal so groß ist wie das Volumen des Harzes.

5. Verfahren zur Identifizierung der Einheit, die zu einem Austritt von Rohwasser in einem Kondensator eines Wärmekraftwerks nach Anspruch 4 führt, wobei die Säurelösung eine starke Säurelösung ist, die eine Konzentration von Na⁺- und Ca²⁺-Ionen von weniger als 1 ppb, insbesondere weniger als 0,5 ppb, insbesondere weniger als 0,2 ppb aufweist.

6. Verfahren zur Identifizierung der Einheit, die zu einem Austritt von Rohwasser in einem Kondensator eines Wärmekraftwerks nach Anspruch 3 bis 5 führt, wobei der Schritt e) durch Elution des Kationenharzes mit einem Volumen von wässriger Regenerationslösung durchgeführt wird, das mindestens 2-mal, insbesondere mindestens 4-mal, vorteilhafterweise mindestens 5-mal so groß ist wie das Volumen des Harzes.

7. Verfahren zur Identifizierung der Einheit, die zu einem Austritt von Rohwasser in einem Kondensator eines Wärmekraftwerks nach Anspruch 6 führt, wobei die wässrige Regenerationslösung eine starke Säurelösung ist, die eine Konzentration von Na⁺- und Ca²⁺-Ionen von weniger als 1 ppb, insbesondere weniger als 0,5 ppb, insbesondere weniger als 0,2 ppb aufweist.

8. Verfahren zur Identifizierung der Einheit, die zu einem Austritt von Rohwasser in einem Kondensator eines Wärmekraftwerks nach Anspruch 1 oder 2 führt, wobei das Rohwasser Cl⁻-Ionen enthält und das Ionenaustauscherharz ein Anionenharz ist.

## Claims

1. A process for identifying the unit causing a raw water leak in a condenser of a thermal power plant consisting of n units, n being an integer comprised between 2 and 15, preferably between 3 and 8,
**characterized in that** each of the n units is equipped with a cartridge intended to contain an ion-exchange resin in a volume comprised between 50 and 150 mL, advantageously between 80 and 120 mL,
and **in that** it comprises the following steps:
a) for each of the n units, purifying the ion-exchange resin intended to be placed in the cartridge;
b) for each of the n units, placing the purified ion-exchange resin obtained at the end of step a) in the cartridge;
c) for each of the n units, passing a volume of condensate comprised between 500 and 1 500 L, advantageously between 800 and 1 200 L, into the cartridge containing the purified ion-exchange resin placed during step b);
d) for each of the n units, collecting the ion-exchange resin obtained at the end of step c);
e) for each of the n units, regenerating the ion-exchange resin collected during step d) by elution using an aqueous regeneration solution;
f) for each of the n units, collecting the eluate obtained at the end of step e) followed by determining the nature of the ionic species present in the eluate and the amount of each ionic species present in said eluate; and
g) for each of the ionic species identified during step f), comparing the amounts of said ionic species determined in each of the n eluates.

2. The process for identifying the unit causing a raw water leak in a condenser of a thermal power plant as claimed in claim 1, wherein the ion-exchange resin has a total exchange capacity greater than 1.0 eq/L, preferably greater than 1.5 eq/L, advantageously greater than 2.0 eq/L.

3. The process for identifying the unit causing a raw water leak in a condenser of a thermal power plant as claimed in claim 1 or 2, wherein the raw water contains Na⁺ and/or Ca²⁺ ions, and the ion-exchange resin is a cationic resin.

4. The process for identifying the unit causing a raw water leak in a condenser of a thermal power plant as claimed in claim 3, wherein step a) is carried out by eluting the cationic resin with a volume of acid solution at least 2 times greater, in particular at least 4 times greater, advantageously at least 5 times greater than the volume of resin.

5. The process for identifying the unit causing a raw water leak in a condenser of a thermal power plant as claimed in claim 4, wherein the acid solution is a strong acid solution which has a concentration of Na⁺ and Ca²⁺ ions of less than 1 ppb, particularly less than 0.5 ppb, in particular less than 0.2 ppb.

6. The process for identifying the unit causing a raw water leak in a condenser of a thermal power plant as claimed in any one of claims 3 to 5, wherein step e) is carried out by eluting the cationic resin with a volume of aqueous regeneration solution at least 2 times greater, in particular at least 4 times greater, advantageously at least 5 times greater than the volume of resin.

7. The process for identifying the unit causing a raw water leak in a condenser of a thermal power plant as claimed in claim 6, wherein the aqueous regeneration solution is a strong acid solution which has a concentration of Na⁺ and Ca²⁺ ions of less than 1 ppb, particularly less than 0.5 ppb, in particular less than 0.2 ppb.

8. The process for identifying the unit causing a raw water leak in a condenser of a thermal power plant as claimed in claim 1 or 2, wherein the raw water contains Cl⁻ ions, and the ion-exchange resin is an anionic resin.
